# EUROPÄISCHE PATENTSCHRIFT

(11) **EP 2 834 074 B1**
(45) Veröffentlichungstag und Bekanntmachung des Hinweises auf die Patenterteilung: **10.05.2017**
(21) Anmeldenummer: 13711569.7
(22) Anmeldetag: 04.03.2013
(51) Int. Cl.: G06K 19/067, B32B 37/12, B32B 7/12, B32B 19/02, B32B 27/20, B32B 27/32

(54) **VERFAHREN ZUR HERSTELLUNG EINES KARTENKÖRPERS UND KARTENKÖRPER**
METHOD FOR PRODUCING A CARD BODY AND CARD BODY
PROCÉDÉ DE PRODUCTION D'UN CORPS DE CARTE ET CORPS DE CARTE

(30) Priorität: 03.04.2012 DE 102012006883
(43) Veröffentlichungstag der Anmeldung: 11.02.2015
(73) Patentinhaber: Giesecke & Devrient GmbH, 81677 München (DE)
(72) Erfinder: MARTINEZ MONDÉJAR, Emilio, E-08018 Barcelona (ES); REDONDO, Gemma, E-08940 Cornella de Llobregat Barcelona (ES)
(86) Internationale Anmeldenummer: PCT/EP2013/000650
(87) Internationale Veröffentlichungsnummer: WO 2013/149694

(56) Entgegenhaltungen:
- WO-A2-2007/016148

## Beschreibung

Die Erfindung betrifft die Herstellung eines Kartenkörpers für tragbare Datenträger, der auf einem synthetischen Papier basiert Insbesondere betrifft die Erfindung die Herstellung von Kartenkörpern für tragbare Datenträger im Kredit- oder Chipkartenformat.

Kartenförmige tragbare Datenträger im Kreditkartenformat sind weit verbreitet. Sie werden insbesondere als Zahl- oder Ausweiskarten oder, in kleineren Formaten, als Authentifizierungs- oder Speicherkarten eingesetzt. Der größte Teil der Karten ist mit einem Magnetstreifen und/ oder einem Mikroprozessor sowie einer Datenschnittstelle für Lesegeräte ausgestattet, die es ermöglichen mit Hilfe der Karte Datenverarbeitungsaufgaben durchzuführen. Die Mikroprozessor-ICs sind u.a. durch eine sehr kleine Baugröße besonders manipulationssicher ausgeführt, verfügen aber im Vergleich zu gängigen Standardmikroprozessoren etwa für PCs über eine stark eingeschränkte Rechenleistung, sie sind mithin ressourcenbeschränkt. Karten der genannten Art verfügen in der Regel über keine oder allenfalls über eine reduzierte Benutzerschnittstelle mit wenigen Elementen, z.B. in Form eines einzeiligen Displays und/ oder einer kleinen Anzahl von Tasten und/ oder eines Sensors zur Erfassung eines biometrischen Merkmals. Die Herstellung von Karten der vorgenannten Art ist ebenfalls hinlänglich bekannt, z.B. aus dem "Handbuch der Chipkarten", W. Rankl, W. Effing, 5. Auflage, 2008, Karl Hanser Verlag München oder dem Buch vom "Plastik zur Chipkarte", T. Tarantino, Y. Haghiri, 1999, Karl Hanser Verlag München. In einem gängigen Herstellungsverfahren werden die Karten danach aus mehreren Schichten aufgebaut, die durch Laminieren miteinander verbunden werden. Die Schichten bestehen typischerweise aus Kunststoff. Übliche Kunststoffe sind insbesondere PVC, Polycarbonat oder Kunststoffe auf Polyesterbasis. Bekannt ist daneben auch die Herstellung von Karten aus Papier Mit den bekannten Materialien lassen sich Karten für viele Anforderungen herstellen. Es besteht gleichwohl grundsätzlich das Bestreben, das Spektrum an möglichen Kartenaufbauten ständig zu vergrößern, um entsprechend das Spektrum der erfüllbaren Anforderungen zu vergrößern.

Aus der EP 945244 A1 ist ein Verfahren zur Herstellung eines synthetischen Papiers bekannt, das besonders umweltfreundlich ist. Das hergestellte synthetische Papier besteht, bezogen auf das Gewicht, zu 56% bis 80% aus einem anorganischen Grieß, insbesondere Kalziumkarbonat, und enthält, bezogen auf das Gewicht, einen Anteil von 18% bis 43% Polyethylen, insbesondere hochdichtes Polyethylen.

Aus der US 4,879,153 A ist eine aus mehreren laminierten Schichten aufgebaute IC-Karte bekannt, die eine Kernstruktur aus mehreren steifen PVC-Schichten aufweist mit einer Kavität, in der ein IC-Modul angeordnet ist. Zur Verbesserung der Biegefestigkeit der Karte sind auf einer oder beiden Seiten der Kernstruktur desweiteren Schichten aus synthetischem Papier ausgebildet. Deren Gesamtstärke beträgt vorzugsweise bis zu einem Drittel der gesamten Kartendicke. Zumindest eine der Schichten aus synthetischem Papier ist so angeordnet, dass sie an der Unterseite des IC-Moduls anliegt. Die bekannte Lösung beschränkt sich darauf, die biegeelastischen Eigenschaften von synthetischem Papier zu nutzen. Da die vorgeschlagene Karte zum größeren Teil aus PVC besteht, ist sie hinsichtlich ihrer Umweltverträglichkeit aus heutiger Sicht eher kritisch zu beurteilen.

Ferner geht aus der WO 2007/016148 A2 eine laminierte Plastikkarte mit einem eingebetteten Wasserzeichen hervor. Dazu wird eine mikroporöse, siliciumgefüllte Polyethylenschicht verwendet. Diese Schicht kann ferner mit einem Hoch- und/oder Tiefprägeverfahren bearbeitet werden.

Aufgabe der Erfindung ist es eine Karte anzugeben, die umweltfreundliche Eigenschaften aufweist und in einem umweltfreundlichen Verfahren herstellbar ist.

Diese Aufgabe wird gelöst durch ein Verfahren mit den Merkmalen des Hauptanspruchs. Das erfindungsgemäße Verfahren zeichnet sich dadurch aus, dass der Kunststoffanteil in hergestellten Kartenkörpern verringert ist und die mit der Herstellung von normalem Papier verbunden Umweltbeeinträchtigungen, etwa ein erheblicher Wasserverbrauch, vermieden werden. Die hergestellten Karten weisen eine neuartige Haptik und Anmutung auf und setzen sich erkennbar von anderen Kartenaufbauten ab. Die Kartenkörper können ohne weiteres insbesondere die durch die ISO 7810 gesetzten Anforderungen erfüllen und eignen sich in vorteilhafter Weise für Chipkarten. Das erfindungsgemäße Verfahren beruht wesentlich auf der unerwarteten Erkenntnis, dass der Einsatz von synthetischem Papier mit ganz ähnlichen Verfahrensbedingungen machbar ist, wie sie für die Herstellung von mehrschichtigen Kunststoff-Kartenkörpern bekannt sind. Das Verfahren kann deshalb mit gängigen Anlagen durchgeführt werden. In einer bevorzugten Ausführung wird auf mindestens eine Außenseite des Kartenkörperkernes eine Deckschicht aus Kunststoff aufgebracht, vorzugsweise aus PVC.

Unter Bezugnahme auf die Zeichnung wird nachfolgend ein Ausführungsbeispiel der Erfindung näher erläutert.

Es zeigen:
- Fig. 1: ein Flussdiagramm der Herstellung eines Kartenkörpers und
- Fig. 2: einen Querschnitt durch einen verfahrensgemäß hergestellten Kartenkörper.

Für die folgende Beschreibung wird beispielhaft davon ausgegangen, dass ein Kartenkörper für einen tragbaren Datenträger in Gestalt einer Chipkarte mit üblichen äußeren Abmessungen gemäß der ISO-Norm 7810 hergestellt wird. Das Verfahren lässt sich in gleicher Weise aber auch zur Herstellung von tragbaren Datenträgern mit anderen Abmessungen einsetzen. Beispielsweise können auf dieselbe Weise auch tragbare Datenträger im SIM-Kartenformat oder tragbare Datenträger, die z.B. zusammen mit einem Gehäuse als USB-Stick dienen, hergestellt werden.

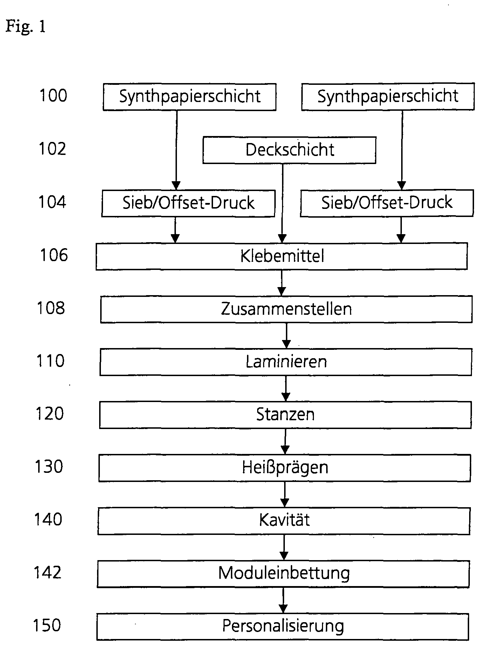

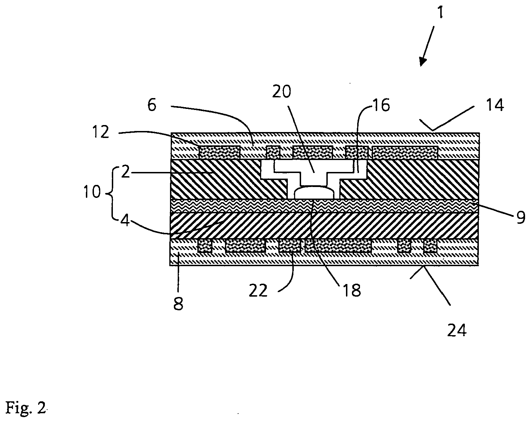

Das Verfahren ist in Fig. 1 als Flussdiagramm veranschaulicht. Es setzt mit einem Schritt 100 ein, indem zwei in der Fig. als Synthpapierschichten I und II bezeichnete Schichten 2, 4 aus synthetischem Papier mit einer Dicke von 50 bis 400 µm bereitgestellt werden. Bei dem synthetischen Papier handelt es sich um im Handel erhältliches, gewerbliches Material, wie es z.B. von der Firma EMANAGREEN, Spanien angeboten wird. Es enthält typischerweise einen Anteil von 75 bis 80 Gew. % Mineralpuder, insbesondere Kalziumkarbonat, sowie einen Anteil von 20 bis 25 Gew. % Kunstharz, z.B. hochdichtes Polyethylen (HDPE). Das Verhältnis der Bestandteile kann dabei etwas variieren, jedoch wird ein Verhältnis von 3:1 nicht unterschritten. Dem synthetischen Papier können in kleinen Anteilen weitere Stoffe zugesetzt sein. Zweckmäßig wird das synthetische Papier in Bogenform oder als Rolle bereitgestellt. Die beiden Schichten 2, 4 aus synthetischem Papier bilden später die Kernstruktur 10 eines herzustellenden Datenträgers 1, wie er in Fig. 2 dargestellt ist.

In einer zweckmäßigen Ausführungsform wird desweiteren mindestens eine Deckschicht 6,8 bereitgestellt, die z.B. aus PVC bestehen kann, Schritt 102. Die Deckschicht 6, 8 besteht vorzugsweise aus einem biologisch abbaubaren Kunststoff, kann in einfacher Weise aber auch aus einem anderen gängigen Kunststoff, z.B. PVC bestehen. Sie hat eine Dicke von 100 bis 600 µm. Wird PVC oder ein anderer biologisch schwer abbaubarer Kunststoff eingesetzt, sollte die Dicke einer Deckschicht 6, 8 ein Wert von 100 µm nicht übersteigen. Zweckmäßig ist die Deckschicht 6, 8 transparent.

In einer Variante werden, wie in Fig. 2 gezeigt, zwei Deckschichten 6, 8 bereitgestellt, die dabei aus verschiedenen Materialien bestehen und unterschiedliche Opazitäten aufweisen können. Beispielsweise kann eine Deckschicht 6 aus PVC bestehen und transparent sein, während die andere Deckschicht 8 aus PETG besteht und halbtransparent ist. Die Deckschichten 6, 8 können als Folien bereitgestellt werden, die mit den anderen Schichten 2,4 laminiert werden. Alternativ können sie auch in Form einer Lackschicht aufgebracht werden, z.B. durch ein geeignetes Druckverfahren. Sofern der fertige Datenträger 1 einen Magnetstreifen besitzen soll, wird zweckmäßig eine der Deckschichten 6, 8 mit einem Magnetstreifen ausgestattet. Die Deckschichten 6, 8 sind optional. Sie können auch entfallen.

In einem Schritt 104 wird jeweils auf eine Seite der Schichten 2, 4 aus synthetischem Papier in einem Siebdruck- oder Offset-Druckverfahren oder mittels Digitaldrucks ein graphisches Muster 12, 22 aufgebracht. Das graphische Muster 12, 22 kann Flächen, Strukturen und/ oder alphanumerische Zeichen umfassen. Die graphischen Muster 12, 22 können unterschiedlich ausgeführt sein. Der Bedruckungsschritt kann mit üblichen Druckparametern und Druckfarben ausgeführt werden, wie sie zum Bedrucken von Chip- und Kreditkarten eingesetzt werden
In einem Schritt 106 wird auf eine, zweckmäßig auf beide jeweils anderen Seiten der Schichten 2, 4 ein dünner Film eines Klebemittels aufgebracht, das die nachfolgende Lamination unterstützt. Das Klebemittel 9 wird erfindungsgemäß in Form eines Klebelacks bereitgestellt. Diese Form wird für die weitere Beschreibung zugrundegelegt. Der Auftrag des Klebelacks 9 erfolgt z.B. im Siebdruckverfahren, die Dicke der Klebelackschicht liegt unter 5 µm. Ohne Klebelack 9 haften die beiden Schichten 2, 4 nicht ausreichend stark aneinander. Ein geeigneter Klebelack 9 ist z.B. von der Firma Polynorma SA, Barcelona, E-08030 Spanien, unter der Bezeichnung "Barniz Inter HV X3" erhältlich.

Die Schichten 2, 4 aus synthetischem Papier und die Deckschichten 6, 8 werden in einem nachfolgenden Schritt 108 in Sandwich-Anordnung übereinander angeordnet, so dass die Schichten 2, 4 aus synthetischem Papier zwischen den Deckschichten 6, 8 und die mit Klebelack 9 bedruckten Seiten der Schichten 2, 4 aneinanderliegen. Ist nur eine Deckschicht vorhanden, werden die Schichten aus synthetischem Papier auf dieselbe Weise unter der Deckschicht angeordnet.

In dieser Anordnung werden die Schichten 2, 4, 6, 8 im folgenden Schritt 110 zu einem Halbzeug laminiert. Das Laminieren geschieht in einem für die Herstellung von Chip- und Kreditkarten üblichen Laminierverfahren. Dieses umfasst z.B. zwei Heiz- und zwei Kühlschritte. Die Heizschritte erfolgen bei Temperaturen von 130 bis 180 °C. Der Druck beträgt dabei im ersten Heizschritt z.B. 10 bis 20 bar bei einer Heizzeit vom 1 bis 5 min und 60 bis 100 bar bei einer Einwirkzeit vom 10 bis 20 min im zweiten Heizschritt. Die Kühlschritte erfolgen bei Raumtemperatur und Drücken von 60 bis 160 bar. Die Kühlzeiten liegen im ersten Schritt zwischen 1 und 10 min, im zweiten Schritt zwischen 5 und 20 min.

Nach Ausführung des Schrittes 110 liegt ein flächiges, mehrschichtiges Halbzeug vor, das zumindest eine aus zwei synthetischen Papierschichten 2, 4 gebildete Kernstruktur 10 aufweist, die auf den Außenseiten jeweils ein graphischen Muster 12, 22 trägt. Die Kernstruktur 10 kann zudem ein- oder beidseitig mit einer transparenten bzw. transluzenten Deckschicht 6, 8 abgedeckt sein. Die Oberflächen 14, 24 des Halbzeugs entsprechen bis auf eine nachfolgende Personalisierung und/ oder die Einbringung eines ICs den endgültigen Oberflächen 14, 24 des fertigen tragbaren Datenträgers 1.

Im folgenden Schritt 120 wird aus dem flächigen Halbzeug ein Kartenkörper mit der für den Datenträger 1 vorgesehenen äußeren Endform herausgetrennt. Das Trennen geschieht zweckmäßig durch Stanzen, kann aber auch durch Schneiden oder Fräsen geschehen.

In einem anschließenden Schritt 130 können auf den Kartenkörper in einem üblichen Heißprägeverfahren Heißprägeelemente aufgebracht werden.

Sofern der herzustellende tragbare Datenträger eine Chipkarte ist, erfolgen anschließend Schritte 140,142 zum Anlegen einer Kavität indem Kartenkörper und zum Einsetzen eines Chipmoduls in die erzeugte Kavität. Ist der herzustellende tragbare Datenträger allerdings beispielsweise eine reine Magnetstreifenkarte oder ein reine Ausweiskarte ohne Mikroprozessor-IC oder Magnetstreifen, entfallen die Schritte 140,142.

Der danach vorliegende Kartenkörper wird schließlich in einem Schritt 150 personalisiert. Dies geschieht beispielsweise durch Aufbringung von personenbezogenen Daten in einem Thermotransferverfahren und/ oder durch Kerben; andere an sich bekannte Personalisierungsverfahren können ebenfalls eingesetzt werden.

Fig. 2 zeigt einen Querschnitt durch Datenträger 1 mit einem verfahrensgemäß hergestellten Kartenkörper. Die Dicken der einzelnen Schichten und Elemente sind dabei nicht maßstabsgerecht. Der Datenträger 1 besteht aus einer Kernstruktur 10, die ihrerseits aus zwei Schichten 2,4 aus synthetischem Papier besteht. Die Kernstruktur 10 ist auf beiden nach außen weisenden Seiten mit graphischen Mustern 12, 22 versehen. Über die graphischen Muster 12, 22 ist auf beiden Seiten jeweils eine transparente Deckschicht 6, 8 aufgebracht. In die obere Schicht 2 aus synthetischem Papier ist eine Kavität 16 eingebracht, in der ein IC-Modul 20 angeordnet ist. Das IC-Modul 20 ist mittels eines Klebstoffes 18 am Boden und/ oder an anderen geeigneten Auflagestellen, der Kavität 16 fixiert, z.B. wie in Fig. 2 angedeutet, an zwischen einem weiten und einem schmaleren Bereich der Kavität 16 ausgebildeten Modulschultern.

Das vorstehend beschriebene Verfahren gestattet eine Reihe von Abwandlungen und Ausgestaltungen, die nicht notwendigerweise erfindungsgemäß sind. So ist es möglich drei oder mehr Schichten aus synthetischem Papier zu verwenden. Über die Deckschichten 6, 8 können ferner jeweils weitere Schichten aufgebracht werden. Der Schritt des Trennens kann auch mit anderen Trennungstechniken erfolgen, etwa durch zusätzliche Anwendung eines Lasers oder durch Vorstanzen der Randkontur. Das Klebemittel 9 kann ferner auch in anderer Form als Klebelack bereitgestellt werden.

## Patentansprüche

1. Verfahren zum Herstellen eines mehrschichtigen Kartenkörpers für einen tragbaren Datenträger mit folgenden Schritten:
- Bereitstellen einer ersten und einer zweiten Schicht (2, 4) aus synthetischem Papier (100), wobei das synthetische Papier auf Kalziumkarbonat basiert, dem hochdichtes Polyethylen (HDPE) zugesetzt ist, wobei das Verhältnis mindestens 3 zu 1 bezogen auf das Gewicht beträgt.
- Aufdrucken eines graphischen Musters (12, 22) auf jeweils eine Seite der Schichten aus synthetischem Papier (104),
- Aufbringen eines Klebelacks (9) auf die andere Seite zumindest einer der Schichten (2, 4) aus synthetischem Papier (104),
- Zusammenführen der jeweils einseitig bedruckten Schichten (2, 4) aus synthetischem Papier (102), so dass die Oberseiten mit dem graphischen Muster (12, 22) nach außen weisen und die mit Klebelack (9) beschichtete Seite bzw. Seiten aneinanderliegen, so dass der Klebelack (9) zwischen den Schichten (2, 4) aus synthetischem Papier liegt,
- Laminieren (110) der zusammengeführten Schichten (2, 4) bei einer Temperatur von 120 bis 180° C, vorzugsweise von 140 bis 160 °C, und einem Druck von 60 bis 100 bar, vorzugsweise von 75 bis 95 bar, zu einem Halbzeug, das eine aus zwei synthetischen Papierschichten (2, 4) gebildete Kernstruktur (10) aufweist, die auf den Außenseiten jeweils ein graphischen Muster (12, 22) trägt,
- Heraustrennen des Kartenkörpers (1) aus dem Halbzeug mittels eines Trennwerkzeuges.

2. Verfahren nach einem der vorhergehenden Ansprüche, **dadurch gekennzeichnet, dass** in den Kartenkörper (1) eine Kavität (16) eingebracht und darin ein IC-Modul (20) angeordnet wird, wobei die Kavität (16) zumindest eine synthetische Papierschicht (2, 4) der Kernstruktur (10) durchdringt.

3. Verfahren nach Anspruch 1, **dadurch gekennzeichnet, dass** die Schichten (2,4) aus synthetischem Papier eine Dicke von 80 bis 400 µm besitzen.

4. Verfahren nach Anspruch 1, **dadurch gekennzeichnet, dass** der Klebelack (9) mit einer Dicke von höchstens 5 µm aufgebracht wird.

5. Verfahren nach Anspruch 1, **dadurch gekennzeichnet, dass** das graphische Muster (12, 22) durch ein Siebdruck- oder ein Offset-Druckverfahren aufgebracht wird.

6. Verfahren nach einem der vorhergehenden Ansprüche, **dadurch gekennzeichnet, dass** das Trennen durch Stanzen erfolgt.

7. Verfahren nach einem der vorhergehenden Ansprüche, **dadurch gekennzeichnet, dass** über den zusammengeführten Schichten (2, 4) aus synthetischem Papier zusätzlich wenigstens eine Deckschicht (6, 8) angeordnet und mitlaminiert wird.

8. Verfahren nach Anspruch 7, **dadurch gekennzeichnet, dass** die Deckschicht (6, 8) eine PVC-Folie ist.

9. Verfahren nach einem der vorhergehenden Ansprüche, **dadurch gekennzeichnet, dass** der Kartenkörper (1) heißgeprägt wird.

10. Tragbarer Datenträger mit einem mehrschichtigen Kartenkörper erhältlich durch ein Verfahren nach einem der Ansprüche 1 bis 9.

11. Tragbarer Datenträger nach Anspruch 10, **dadurch gekennzeichnet, dass** die Schichten (2,4) aus synthetischem Papier eine Dicke von 80 bis 400 µm besitzen und die Dicke des Klebelacks (9) weniger als 5 µm beträgt.

12. Tragbarer Datenträger nach Anspruch 10, **dadurch gekennzeichnet, dass** der Kartenkörper (1) eine Kavität (16) aufweist, in der ein IC-Modul (20) angeordnet ist, wobei sich die Kavität (16) in zumindest eine der Schichten (2,4) aus synthetischem Papier erstreckt.

13. Tragbarer Datenträger nach Anspruch 10, **dadurch gekennzeichnet, dass** die Kernstruktur (10) ein- oder beidseitig mit einer transparenten bzw. transluzenten Deckschicht (6, 8) abgedeckt ist.

## Claims

1. A method for manufacturing a multilayer card body for a portable data carrier having the following steps:
- making available a first and a second layer (2, 4) of synthetic paper (100), the synthetic paper being based on calcium carbonate to which high-density polyethylene (HDPE) is added, the ratio amounting to at least 3 to 1 based on weight,
- respectively printing a graphical pattern (12, 22) to one side of the layers of synthetic paper (104),
- applying an adhesive lacquer (9) to the other side of at least one of the layers (2, 4) of synthetic paper (104),
- bringing together the respectively one-sided printed layers (2, 4) of synthetic paper (102), so that the upper sides with the graphical pattern (12, 22) point outwardly and the side or sides coated with adhesive lacquer (9) lie against each other, so that the adhesive lacquer (9) lies between the layers (2, 4) of synthetic paper,
- laminating (110) the brought-together layers (2, 4) at a temperature of 120 to 180°C, preferably 140 to 160°C, and a pressure of 60 to 100 bar, preferably 75 to 95 bar, into a half-product which has a core structure (10) formed from two synthetic paper layers (2, 4) and respectively bearing a graphical pattern (12, 22) on the outer sides,
- separating the card body (1) from the half-product by means of a separating tool.

2. The method according to any of the preceding claims, **characterized in that** there is formed in the card body (1) a cavity (16) and therein an IC module (20) is disposed, the cavity (16) penetrating at least one synthetic paper layer (2, 4) of the core structure (10).

3. The method according to claim 1, **characterized in that** the layers (2, 4) of synthetic paper possess a thickness of 80 to 400 µm.

4. The method according to claim 1, **characterized in that** the adhesive lacquer (9) is applied with a thickness of no more than 5 µm.

5. The method according to claim 1, **characterized in that** the graphical pattern (12, 22) is applied by a screen printing or an offset printing process.

6. The method according to any of the preceding claims, **characterized in that** the separation is effected by punching.

7. The method according to any of the preceding claims, **characterized in that** at least one cover layer (6, 8) is additionally disposed over the brought-together layers (2, 4) of synthetic paper and laminated as well.

8. The method according to claim 7, **characterized in that** the cover layer (6, 8) is a PVC foil.

9. The method according to any of the preceding claims, **characterized in that** the card body (1) is hot-stamped.

10. A portable data carrier having a multilayer card body obtainable by a method according to any of claims 1 to 9.

11. The portable data carrier according to claim 10, **characterized in that** the layers (2, 4) of synthetic paper possess a thickness of 80 to 400 µm, and the thickness of the adhesive lacquer (9) amounts to less than 5 µm.

12. The portable data carrier according to claim 10, **characterized in that** the card body (1) has a cavity (16) in which an IC module (20) is disposed, the cavity (16) extending into at least one of the layers (2, 4) of synthetic paper.

13. The portable data carrier according to claim 10, **characterized in that** the core structure (10) is covered on one or both sides with a transparent or translucent cover layer (6, 8).

## Revendications

1. Procédé de fabrication d'un corps de carte multicouche pour un support de données portable, comprenant les étapes suivantes :
- mise à disposition d'une première et d'une deuxième couche (2, 4) en papier synthétique (100), le papier synthétique étant basé sur du carbonate de calcium auquel est ajouté du polyéthylène haute densité (HDPE), le rapport étant d'au moins 3 à 1 relativement au poids.
- impression d'un motif graphique (12, 22) sur respectivement une face des couches en papier synthétique (104),
- application d'un vernis adhésif (9) sur l'autre face d'au moins une des couches (2, 4) en papier synthétique (104),
- accolement des couches (2, 4) en papier synthétique (102) respectivement imprimées sur une face, de telle manière que les faces de dessus pourvues du motif graphique (12, 22) sont tournées vers l'extérieur et que la face ou les faces revêtue(s) de vernis adhésif (9) se trouvent l'une contre l'autre, de telle sorte que le vernis adhésif (9) se trouve entre les couches (2, 4) en papier synthétique,
- laminage (110) des couches (2, 4) accolées, à une température de 120 à 180° C, de préférence de 140 à 160° C, et à une pression de 60 à 100 bar, de préférence de 75 à 95 bar, de façon à obtenir un semi-fini comportant une structure d'âme (10) qui est constituée par deux couches en papier (2, 4) synthétiques et qui porte sur ses faces extérieures respectivement un motif graphique (12, 22),
- découpage du corps de carte (1) du semi-fini au moyen d'un outil de découpage.

2. Procédé selon une des revendications précédentes, **caractérisé en ce que**, dans le corps de carte (1), une cavité (16) est pratiquée, dans laquelle un module IC (20) est agencé, la cavité (16) transperçant au moins une couche en papier (2, 4) synthétique de la structure d'âme (10).

3. Procédé selon la revendication 1, **caractérisé en ce que** les couches (2, 4) en papier synthétique ont une épaisseur située entre 80 et 400 µm.

4. Procédé selon la revendication 1, **caractérisé en ce que** le vernis adhésif (9) est appliqué en une épaisseur d'au maximum 5 µm.

5. Procédé selon la revendication 1, **caractérisé en ce que** le motif graphique (12, 22) est appliqué par un procédé d'impression par sérigraphie ou offset.

6. Procédé selon une des revendications précédentes, **caractérisé en ce que** la séparation a lieu par découpage à l'emporte-pièce.

7. Procédé selon une des revendications précédentes, **caractérisé en ce que**, par-dessus les couches (2, 4) accolées en papier synthétique, au moins une couche de recouvrement (6, 8) est agencée en plus et y est laminée.

8. Procédé selon la revendication 7, **caractérisé en ce que** la couche de recouvrement (6, 8) est un film PVC.

9. Procédé selon une des revendications précédentes, **caractérisé en ce que** le corps de carte (1) est gaufré à chaud.

10. Support de données portable ayant un corps de carte multicouche, pouvant être obtenu par un procédé selon une des revendications de 1 à 9.

11. Support de données selon la revendication 10, **caractérisé en ce que** les couches (2, 4) en papier synthétique ont une épaisseur située entre 80 et 400 µm et **en ce que** l'épaisseur du vernis adhésif (9) est inférieure à 5 µm.

12. Support de données selon la revendication 10, **caractérisé en ce que** le corps de carte (1) comporte une cavité (16) dans laquelle un module IC (20) est agencé, la cavité (16) s'étendant dans au moins une des couches (2, 4) en papier synthétique.

13. Support de données selon la revendication 10, **caractérisé en ce que** la structure d'âme (10) est recouverte sur une ou sur ses deux faces par une couche de recouvrement (6, 8) transparente ou translucide.
